# EUROPÄISCHE PATENTSCHRIFT

(11) **EP 1 484 679 B1**
(45) Veröffentlichungstag und Bekanntmachung des Hinweises auf die Patenterteilung: **25.07.2018**
(21) Anmeldenummer: 04011340.9
(22) Anmeldetag: 13.05.2004
(51) Int. Cl.: H04L 1/00, G06F 11/07

(54) **Sicherstellung von maximalen Reaktionszeiten in komplexen oder verteilten sicheren und/oder nicht sicheren Systemen**
Method and system to guarantee maximum response times in complex or distributed systems , secure or unsecure systems
Méthode et système pour garantir des temps de réponses maximaux pour systèmes complexes ou distribués , sécurisés ou non

(30) Priorität: 03.06.2003 DE 10325263
(43) Veröffentlichungstag der Anmeldung: 08.12.2004
(73) Patentinhaber: PHOENIX CONTACT GmbH & Co. KG, 32825 Blomberg (DE)
(72) Erfinder: Meyer-Gräfe, Karsten, 33161 Hövelhof (DE); Kalhoff, Johannes, 32825 Blomberg (DE); Horn, Steffen, 31812 Bad Pyrmont (DE); Oster, Viktor, 32825 Blomberg (DE); Stallmann, Oliver, 32257 Bünde (DE)
(74) Vertreter: Blumbach · Zinngrebe Patent- und Rechtsanwälte

(56) Entgegenhaltungen:
- EP-A1- 1 276 262
- WO-A-98/03910
- WO-A1-99/49373
- DE-A1- 19 840 562
- KOPETZ H ET AL: "TTP - A PROTOCOL FOR FAULT-TOLERANT REAL-TIME SYSTEMS" COMPUTER, IEEE SERVICE CENTER, LOS ALAMITOS, CA, US, Bd. 27, Nr. 1, Januar 1994 (1994-01), Seiten 14-23, XP000426338 ISSN: 0018-9162
- KUMAR K V ET AL: "An End-to-End Protocol for Real Time Computer Networks for Safety Applications" COMPUTER AND COMMUNICATION. NEW DELHI, AUG. 28 - 30, 1991, PROCEEDINGS OF THE INTERNATIONAL CONFERENCE ON EC3 - ENERGY, COMPUTER,COMMUNICATION AND CONTROL SYSTEMS (TENCON),, Bd. 2, 28. August 1991 (1991-08-28), Seiten 289-292, XP010282755 New York, US
- KOPETZ H: "SHOULD RESPONSIVE SYSTEMS BE EVENT-TRIGGERED OR TIME-TRIGGERED?" IEICE TRANSACTIONS ON INFORMATION AND SYSTEMS, INFORMATION & SYSTEMS SOCIETY, TOKYO, JP, Bd. E76-D, Nr. 11, 1. November 1993 (1993-11-01), Seiten 1325-1332, XP000424635 ISSN: 0916-8532
- MING T. LIU: "Protocol Engineering" ADVANCES IN COMPUTERS, Bd. 29, 1989, Seiten 79-195, XP008085757
- DIVYAKANT AGRAWAL ET AL: "RECOVERING FROM MULTIPLE PROCESS FAILURES IN THE TIME WARP MECHANISM" IEEE TRANSACTIONS ON COMPUTERS, IEEE SERVICE CENTER, LOS ALAMITOS, CA, US, Bd. 41, Nr. 12, 1. Dezember 1992 (1992-12-01), Seiten 1504-1514, XP000343155 ISSN: 0018-9340
- SUZUKI I: "Specification and verification of the alternating bit protocol by temporal Petri nets" PROCEEDINGS OF THE 32ND MIDWEST SYMPOSIUM ON CIRCUITS AND SYSTEMS (CAT. NO.89CH2785-4), 14. August 1989 (1989-08-14), Seiten 157-160, XP010090146 New York, US
- RAJA P ET AL: "Modeling and scheduling real-time control systems with relative consistency constraints", REAL-TIME SYSTEMS, 1994. PROCEEDINGS., SIXTH EUROMICRO WORKSHOP ON VAESTERAAS, SWEDEN 15-17 JUNE 1994, LOS ALAMITOS, CA, USA,IEEE COMPUT. SOC, 15 June 1994 (1994-06-15), pages 46-52, XP010099942, DOI: 10.1109/EMWRTS.1994.336866 ISBN: 978-0-8186-6340-6
- DECOTIGNIE J D ET AL: "PRODUCER-DISTRIBUTOR-CONSUMER MODEL ON CONTROLLER AREA NETWORK", PROCEEDINGS OF THE IFAC/IFIC WORKSHOP, REAL TIME PROGRAMMING, OXFORD, GB, 6 November 1995 (1995-11-06), pages 35-42, XP002074139,

## Beschreibung

Die Erfindung betrifft ein Verfahren und ein System zur Sicherstellung von maximalen Reaktionszeiten in einem Datenverarbeitungssystem, insbesondere zwischen einem sicheren Eingangssignal und korrespondierendem sicheren Ausgangssignal.

In kommunizierenden Datenverarbeitungssystem bzw. -anlagen, sind daher Daten einer Nachricht in der Regel nur zu einer bestimmten Zeit oder für eine bestimmte Zeit gültig, da, insbesondere im Falle sicherheitsrelevanter Ein-/Ausgangssignale, festgelegte Reaktionszeiten einzuhalten sind.

Gemäß Stand der Technik wird hierfür üblicherweise eine Laufzeitüberwachung zwischen Sender und Empfänger durchgeführt. Für eine empfangsseitige Laufzeitüberwachung, hängt der Sender eine entsprechende Zeitinformation an die Daten an, wobei sowohl der Sender als auch der Empfänger die Zeit verfolgen müssen. Für eine senderseitige Überwachung wird der Empfang der Daten durch Rücksenden eines Quittungssignals an den Sender bestätigt, wobei dieses zusätzlich eine Überwachung der richtigen Datenfolge ermöglicht.

Unter der Annahme, dass sich die Datenübertragung aus fortlaufenden und zeitfolgerichtig übertragenen Signalen zusammensetzt, offenbart die deutsche Patentschrift DE-101 02 435-C2 ferner ein Verfahren, welches zum einen die Prüfung einer sicheren Datenübertragung als auch eine maximal mögliche oder vertretbare Verzögerung des Sendens eines Nachfolgesignals gewährleistet. Hierzu ist im Einzelnen vorgeschlagen, zur Datenübertragung zwischen miteinander kommunizierenden Datenverarbeitungseinheiten, das Absenden eines nachfolgenden Signals erst unter Ansprechen auf den Ablauf einer Mindestzeit zwischen zwei aufeinanderfolgenden Signalen sowie auf das senderseitige Empfangen eines Quittungssignals der Empfangseinheit auszulösen.

Der Artikel von Kopetz et al., TPP - a protocol for fault-tolerant real-time systems", Computer, IEEE Service Center, Los Alamitos, CA, US, Bd. 27, Nr. 1, Januar 1994, Seiten 14 - 23, offenbart ein zeitgesteuertes Echtzeitsystem, das auf TDMA (Time Domain Multiple Access)-Basis arbeitet, wobei zur Fehlererkennung CRC (Cyclic Redundnacy Check) eingesetzt wird.

Die DE 198 40 562 A1 offenbart ein sicherheitsbezogenes Steuer- und Datenübertragungssystem. Es umfasst einen seriellen Feldbus mit einer daran angeschalteten Master-Einrichtung und wenigstens einem Busteilnehmer, wobei der Busteilnehmer wenigstens eine sicherheitsbezogene Eingangs- und/oder Ausgangseinrichtung für weitere Systemkomponenten umfasst, die über den Feldbus kommunizieren können, wobei über die Eingangseinrichtung eine Aktualisierung des Feldbus-Datenstromes erfolgt, und über die Ausgangseinrichtung unter Ansprechen auf den Datenstrom das Schalten einer zugeordneten Systemkomponente erfolgt. Der Datenstrom umfasst eine der Eingangseinrichtung zugeordnete laufende Nummer, wobei eine Unterbrechung des Datenstromes oder der laufenden Nummer das Schalten der zugeordneten Systemkomponente in einen sicheren Zustand zur Folge hat. Dabei ist eine Busteilnehmer- und/oder verbindungsabhängige dynamische Abfolge für die laufende Nummer vordefiniert. Der Feldbus kann eine Ringstruktur aufweisen und über den Datenstrom kann eine der Ausgangseinrichtungen zugeordnete Zieladressierung sicherheitsbezogener Daten erfolgen. Des Weiteren kann der Feldbus ein Interbus nach DIN EN 19258 mit einem Summenrahmen als Datenrahmen sein, der Eingangs- und/oder Ausgangsdaten des Busteilnehmers umfasst.

Die EP 1 276 262 A1 betrifft ein Kommunikationsnetzwerk, wobei Mittel vorgesehen sind, um die Robustheit eines derartigen Kommunikationsnetzwerks gegen einen Ausfall eines Teils des Kommunikationsnetzwerks zu erhöhen.

Eine Kontrollnachricht, die über die Verbindungen verschickt wird, hat ein Typenfeld für einen Typenidentifizierer, ein Bestimmungsfeld für eine Adresse eines Bestimmungsknotens, ein Extrafeld für einen Serviceindikator, ein Altersfeld und ein Inhaltsfeld für einen Kontrollnachrichtinhalt. Wenn eine Kontrolleinheit erfasst, dass eine Testkontrollnachricht wieder regulär ankommt, berichtet die Kontrolleinheit durch Senden einer Etablierungsroutennachricht an die Knoten, das eine Route existiert. Das Altersfeld ist vorgesehen, um zu verhindern, dass Nachrichten von ausgefallenen Knoten, oder entfernten Knoten, oder Nachrichten mit unzulässigem Ziel weiterhin im Ring zirkulieren. Wenn eine Weiterleitung-/Einführeinrichtung erfasst, dass das Altersfeld der Kontrollnachricht einen Wert aufweist, der größer ist als der Ausgangswert plus die Anzahl Knoten des Rings, löscht sie die Kontrollnachricht. Dies verhindert, dass Kontrollnachrichten weiterhin im Ring zirkulieren. Neben Kontrollnachrichten können auch Datennachrichten ein derartiges Altersfeld aufweisen. Jedoch beanspruchen Datennachrichten ohne ein derartiges Altersfeld weniger Bandbreite. Als bandbreiteschonende Alternative wird vorgeschlagen, die Ursprungsadresse der Nachricht und Informationen über den Ort des Knoten im Ring zu verwenden, um zu bestimmen, wie weit die Nachricht gereist ist.

Der Artikel von Raja P. et al "Modeling and scheduling real-time control systems with relative consistency constraints",REAL-TIME SYSTEMS, 1994. PROCEEDINGS., SIXTH EUROMICRO WORKSHOP ON VAESTERAAS, SWEDEN 15 - 17 JUNE 1994, LOS ALAMITOS, CA, USA, IEEE COMPUT. SOC, 15, Juni 1994, Seiten 46 - 52, XP010099942, betrifft die Modellierung und die Ablaufplanung von Echtzeitregelungssystemen, insbesondere von abgetasteten Systemen.

Der Artikel von Decontigne, J. D. et al, "PRODUCER-DISTRIBUTOR-CONSUMER MODEL ON CONTROLLER AREA NENTWORK", PEOCEEEDINGS OF THE IFAC/IFIC WORKSHOP, REAL TIME PROGRAMMING, OXFORD, GB, 6. November 1995, Seiten 35 - 42, XP002074139, betrifft ein Erzeuger-Verteiler-Verbraucher Modell.

Gemäß WO 99/49373 A1 wird bei einem zyklischen Austauschen zwischen einem Sender und einem Empfänger von Telegrammen ein darin enthaltenes Datum, auch "Lebenszeichen" genannt, in Abhängigkeit von einer fehlerfrei erfolgten Datenübertragung inkrementiert oder dekrementiert, so dass die zyklisch abgesetzten Telegramme unterscheidbar sind und der Empfänger durch Vergleich des Lebenszeichens das jeweils aktuellste Telegramm erkennen kann. Wenn während eines bestimmten Zeitraums das Lebenszeichen unverändert bleibt, steht für den Empfänger fest, dass entweder der Sender ausgefallen ist und keine neuen, aktuelleren Telegramme liefert oder dass die Kommunikationsverbindung zwischen Sender und Empfänger unterbrochen ist, so dass neue, aktuellere Telegramme den Empfänger nicht mehr erreichen können. Mit jedem neuen gültigen, vom Empfänger korrekt empfangenen Telegramm wird die Überwachungszeit neu gestartet. Ferner kann die Laufzeit der jeweiligen Telegramme ermittelt werden, wobei das von einem Empfänger mit dem Telegramm empfangene Lebenszeichen in ein Antworttelegramm kopiert und an den Sender zurückleitet wird. Die Zuordenbarkeit ist hierbei durch das Lebenszeichen des ursprünglichen Telegramms und einem identischen Datum im Antworttelegramm gegeben.

Auf einen neuen, am Prozess anliegenden Status wird jedoch nur dann erkannt, wenn abgesehen vom Lebenszeichen sich auch eine Prüfsignatur und die weiteren im Telegramm enthaltenen Nutzdaten geändert haben.

Aufgabe der Erfindung ist es ein Verfahren bereitzustellen, mit dem die Aktualität einer Nachricht in einem sicherheitskritischen Computernetzwerk überprüft werden kann.

Die erfindungsgemäße Lösung der Aufgabe ist auf höchst überraschende Weise bereits durch die Gegenstände mit den Merkmalen der anhängenden unabhängigen Patentansprüche gegeben.

Vorteilhafte und/oder bevorzugte Ausführungsformen bzw. Weiterbildungen sind Gegenstand der jeweiligen abhängigen Ansprüche.

Basierend auf dem erfindungsgemäß vorgeschlagenen Verfahren, eingangsseitig an im System eingebundenen Teilnehmern anliegende Daten, also Eingangs- und/oder Ausgangsdaten, während jedes Datenzyklus synchron einzulesen, eingelesene Eingangs- und/oder Ausgangsdaten in Bezug auf wenigstens einen Datenzyklus basierten, den eingelesenen Eingangs- und/oder Ausgangsdaten zugeordneten oder zuzuordnenden Aktualitätsparameter zu überprüfen, unter Ansprechen auf das Erreichen einer definierten Abweichung wenigstens eines Aktualitätsparameters gegenüber einer definierten Aktualitätsschwelle auf einen Fehler zu erkennen und unter Ansprechen auf eine Fehlererkennung eine definierte Funktion, insbesondere eine sicherheitsgerichtete Funktion, auszulösen, ist folglich erstmals eine unmittelbare Überwachung einer Systemspezifisch fortlaufenden und/oder zeitfolgerichtigen Ein-/Ausgangs-Informationsbearbeitung und eine hierauf basierte Sicherstellung von maximalen Reaktionszeiten selbsttätig von Teilnehmern durchführbar.

Die Erfindung findet somit insbesondere bei Systemen Anwendung, bei denen es wichtig ist sicherzustellen, dass bestimmte Ausgänge einen definierten Zustand einnehmen, wenn keine korrespondierenden aktuellen Eingangsinformationen vorliegen, beispielsweise bei der Zeitkritischen Überwachung eines sicheren Eingangssignals für die Reaktion eines korrespondierenden sicheren Ausgangssignals.

Hierbei zählt jeder Teilnehmer die gültigen Datenzyklen bezogen auf die Zeit des Einlesens mit. Ein wesentlicher Vorteil hierbei ist, dass eine Weitergabe von auf eingelesenen Eingangs- und/oder Ausgangsdaten basierten Daten auf einfache Weise nur bis zu einer definierten Anzahl von gezählten Datenzyklen erfolgt und andernfalls auf Fehler erkannt wird. Vorgesehen ist hierbei, dass jeder Teilnehmer, der Daten wieder weitergibt, seine eigene Datenzykluszeit des Einlesens auf eine über den Aktualitätsparameter bereits erhaltene Einlesezeit addiert.

In bevorzugter Ausbildung ist vorgesehen, eine Überprüfung eingelesener Ein- und/oder Ausgangsdaten während jedes Datenzyklus durchzuführen, um auf besonders effektive Weise Reaktionszeiten gemäß anwendungsspezifischem Transport von Daten, insbesondere in festen bzw. bestimmbaren Intervallen, Abständen und/oder Zeiten, auch über Grenzen von Systemen, intelligenten Einheiten und/oder innerhalb von Netzwerken, flexibel sicherzustellen.

Zur Synchronisation des Einlesens sieht die Erfindung bevorzugt das zumindest zeitweise Übertragen eines Broadcast- und/oder Latchsignals an alle Teilnehmer vor. Zur dauerhaften Gewährleistung einer in festen Grenzen und/oder zu einem Zeitpunkt definierten Transport-Beziehung auf dem Datenweg in Sende- und/oder Empfangs-Richtung mit allen im insbesondere sicheren Datenstrom liegenden beeinflussenden Einheiten ermöglicht die Erfindung für die praktische Umsetzung somit in vorteilhafter Weise den Einsatz von systemspezifischen Mechanismen, die sicherstellen können, dass alle Teilnehmer zum gleichen Zeitpunkt einen TAKT/IMPULS erhalten.

Bei einer Weiterbildung der Erfindung, erfolgt die Synchronisation bei einem (Bus-) Start und/oder nach einem Fehler durch einen bestimmten Teilnehmer, in bevorzugter Ausführung durch den Master.

Wird die synchrone Datenübernahme gemäß bevorzugter Ausführungsformen unter Verwendung eines Ringschieberegisters durchgeführt, erhält somit, insbesondere unter Ausnutzung der Eigenschaften des Interbus, in zweckmäßiger Weise jeder Teilnehmer nach dem Schieben der Daten synchron zu allen Teilnehmern einen TAKT / IMPULS, dass der Teilnehmer die Ausgabe-Daten übernehmen kann und die Eingabe-Daten eingelesen werden.

Um auf besonders einfache und für das Übertragungsprotokoll in Bit-sparender Weise eine Aktualitätsverifizierung eingelesener Eingangs- und/oder Ausgangsdaten durchzuführen, ist wenigstens eine intelligente Einheit mit treiberartigen Mitteln vorgesehen, die den einzulesenden Daten eindeutige und/oder festen Zeit- und/oder Zyklusstrukturen zuordenbare Aktualitätsparameter zuweist.

Eine bevorzugte Weiterbildung sieht hierbei vor, in jedem Datenzyklus mit von einem bestimmten Teilnehmer, z. B. dem Master, ausgehenden Aktualitätsparameter, beispielsweise Zyklus basierte Werte, wie eine wiederkehrend laufende Nummer, an alle einlesenden Teilnehmer, z. B. den Slaves, zu übertragen, welche der Master in einem folgenden Datenzyklus wieder von den Slaves nach Bearbeitung der eingelesenen Daten zur Verifikation zurück erhält.

Die Erfindung umfasst somit bevorzugt Ausführungsformen, bei welchen ein Wert oder Datum als Aktualitätsparameter nach einer Teilnehmerspezifischen Datenverarbeitung
und/oder -weiterleitung an den Wert oder Datum erzeugenden Teilnehmer rückübersandt wird oder eine Aktualitätsauswertung durch den einlesenden Teilnehmer, insbesondere einen Ausgangsteilnehmer, selbst durchgeführt wird.

Da die Aktualitätsauswertung somit insbesondere auf die für eine Bearbeitung von eingelesenen Daten benötigte Zeit bezogen ist, wird auf äußerst effizient Weise eine Überprüfung ermöglicht, ob eine Teilnehmerspezifische Datenverarbeitung
und/oder -weiterleitung innerhalb einer vorgegebenen/vorgebbaren maximalen Zeit erfolgt, einschließlich einer Verarbeitung von Eingabe-Daten in Ausgabe-Daten durch den Master.

Applikationsspezifisch ist somit ferner bevorzugt vorgesehen, dass das Einleiten einer definierten Maßnahme, insbesondere einer Sicherheitsmaßnahme, unter Ansprechen auf eine erkannte maximale Reaktionsschwellzeit entsprechend durch den Aktualitätsparameter erzeugenden Teilnehmer und/oder durch den jeweils einlesenden Teilnehmer, insbesondere durch einen Ausgangsteilnehmer oder einen Teilnehmer mit zugeordnetem Ausgangsmodel, erfolgt.

Ist beispielsweise bei der Durchführung der Erfindung sichergestellt, dass eine Verarbeitung von Eingabedaten in Ausgabedaten durch einen ausgewählten Teilnehmer, bevorzugt durch den Master innerhalb einer vorgegebenen/vorgebbaren maximalen Zeit erfolgt, ermöglicht dies aufgrund der synchronen Übernahme von Informationen einem Ausgangsteilnehmer selbstständig eine Bestimmung und/oder Überwachung der maximalen zulässigen Alterungszeit einer eingelesenen Eingangsinformation durchführen.

Folglich kann ein Teilnehmer, der weiß, dass seine eingelesenen Daten, die er mit einem bestimmten Zyklus erhalten hat, aus Eingangsdaten, die aus dem vorhergehenden Datenzyklus stammen, berechnet wurden, eine dem Teilnehmer zugeordnete Watchdog auf die Zeit des letzten Datenzyklus zurücksetzen.

Da die Teilnehmer Eingangsteilnehmer und Ausgangsteilnehmer und/oder Master und Slaves umfassen können, ist die Erfindung folglich für im Wesentlichen jedes Datenverarbeitungssystem einsetzbar, wobei Masterfunktionen auch z.B. ähnlich einem Tokenring-System weitergegeben werden können.

Zur Durchführung der Erfindung weist folglich zumindest ein Teilnehmer eine Auswerteeinheit und Reaktions-Vergleichseinrichtung auf, in bevorzugter Ausführung der oder die Teilnehmer mit Aktualitätsparameter erzeugenden Treiber-artigen Mitteln.

Umfasst ein erfindungsgemäß adaptiertes Datenverarbeitungssystem auch Systemkoppler, werden dem Systemkoppler zugeordnete Watchdogzeiten aufgeteilt, da dieser sowohl die Funktion des Masters eines unterlagerten Systems als auch eines Slaves des überlagerten Systems wahrnimmt.

Die Erfindung ist somit aufgrund der äußerst flexiblen Variationsmöglichkeiten bevorzugt bei Datenverarbeitungsystemen einsetzbar, bei welchen die Kommunikation zur Weiterleitung der Daten von einem Slave zu einem anderen und/oder zur Veränderung der Daten über einen Master erfolgt oder ohne einen Master direkt zwischen zwei Slaves erfolgt.

Als weitere bevorzugte Ausführungsformen umfasst die Erfindung insbesondere Applikationen, bei denen der Master eine sichere Steuerung ist und/oder die Slaves sichere digitale/analoge Eingänge und/oder sichere digitale/analoge Ausgänge besitzen und/oder welche eine Mischung von sicheren und/oder normalen Teilnehmer mit und/oder ohne Zeitinformation auch am gleichen Bus aufweisen.

Die Erfindung wird nachfolgend anhand bevorzugter Ausführungsformen unter Bezugnahme auf die beigefügten Zeichnungen beispielhaft beschrieben.
In den Zeichnungen zeigen:
- Fig. 1: zur Darstellung einer ersten bevorzugten Ausführungsform der Erfindung eine stark vereinfachte Prinzipskizze eines Systems zum Betreiben einer Automatisierungsanlage, umfassend mehrere erfindungsgemäße Teilnehmerkomponenten, die jeweils eine zugeordnete intelligente Einheit aufweisen,
- Fig. 2: ein stark schematisiertes Master-Slave-System zur Darstellung weiterer bevorzugter Ausführungsformen der Erfindung,
- Fig. 3: ein vereinfachtes Ablaufschema von Datenzyklen gemäß einer erfindungsgemäßen Master-Slave-basierten Ausbildungsform.

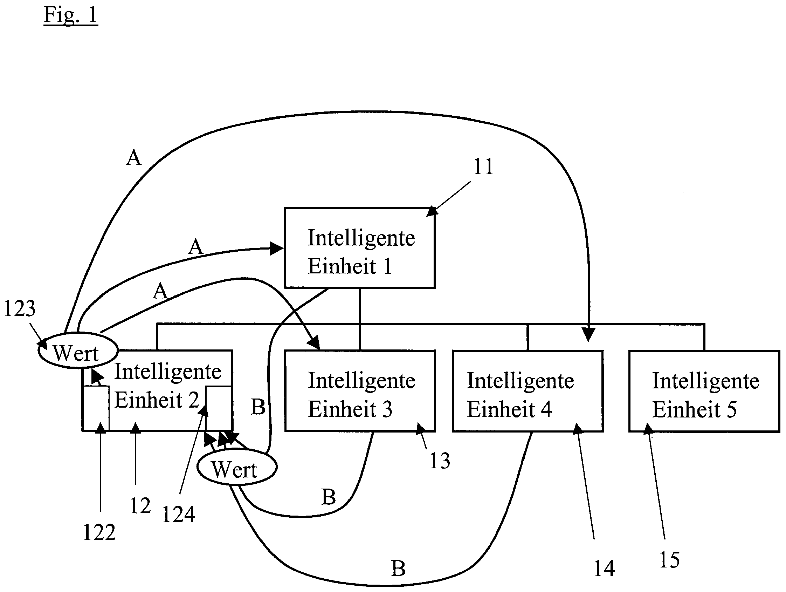

Nachfolgend wird zunächst auf Fig. 1 Bezug genommen, welches für die Erfindung wesentliche Elemente eines Standardnetzwerksystems zum Betreiben einer Automatisierungsanlage in stark vereinfachter Weise dargestellt.

Basierend auf einem derartigen Datenverarbeitungssystem werden von wenigstens einem Eingangsteilnehmer oder einem, einem Teilnehmer zugeordneten Eingangsmodul, Eingangsdaten eingelesen. Diese Daten werden nach Verarbeitung von einem Ausgangsteilnehmer oder einem, einem Teilnehmer zugeordneten Ausgangsmodul, als Ausgangsdaten ausgegeben. Eine Verarbeitung kann im gleichen Teilnehmer erfolgen oder nach Weitergabe der Eingangsdaten durch einen anderen, der nach Verarbeitung der Eingangsdaten zu Ausgangsdaten diese ausgibt oder einem anderen Teilnehmer zur Ausgabe übergibt.

Im Einzelnen zeigt Fig. 1 eine Anzahl von im Standardnetzwerksystem eingebundenen Teilnehmern 11, 12, 13, 14 und 15, die jeweils über eine intelligente Einheit 1, 2, 3, 4 bzw. 5 verfügen, welche für definierte Applikationen und/oder an definierten Positionen des Netzwerkes vorgesehen sind.

Die den Teilnehmern 11, 12, 13, 14 und 15 zugeordneten intelligenten Einheiten 1, 2, 3, 4 und 5 umfassen somit bevorzugt anlagenspezifische Anlagenkomponenten, wie beispielsweise Sensoren und/oder Aktoren, und weisen ferner eine zugeordnete, nicht näher dargestellte Logik zum entsprechenden teilnehmerspezifischen Verarbeiten von Daten auf.

Bei der in Fig. 1 beispielhaft dargestellten Applikation umfasst zumindest die dem Teilnehmer 12 zugeordnete intelligente Einheit 2 Treiber-artige Mittel 122, welche wechselnde Werte 123 erzeugen, die eindeutig und in festen Zeitrastern über einen längeren Zeitraum zur Verfügung stehen.

Zur Überwachung und/oder Feststellung von Reaktionszeiten zwischen sicheren Eingangsdaten und korrespondierenden sicheren Ausgangsdaten übermittelt der Teilnehmer 12 die Werte 123, wie mit den Pfeilen A gekennzeichnet, synchron an alle intelligenten Einheiten, welche sichere Daten weiterleiten und/oder verarbeiten, im vorliegenden Beispiel an die intelligenten Einheiten 1, 3, und 4.

Die übermittelten Werte 123 werden daraufhin von den zur Bearbeitung sicherer Daten vorgesehenen Teilnehmer 11, 13, und 14 zusammen mit aktuell im entsprechenden Datenzyklus anliegenden sicheren Eingabe- und/oder Ausgabedaten eingelesen. Nach Weiterverarbeitung und/oder Weiterleitung dieser eingelesenen Daten durch die jeweiligen intelligenten Einheiten 1, 3 und 4 wird der entsprechend zuvor zugeordnete Wert 123 an den Wert-Erzeugenden-Teilnehmer 11 zurückgemeldet, wie mit den Pfeilen B gekennzeichnet. Mittels
einer Auswerteeinheit 124 der intelligenten Einheit 2 wertet der Teilnehmer 11 die jeweils zurück gesandten Werte 123 zur Ermittlung der jeweiligen Reaktionszeit betreffend Bearbeitung der eingelesenen sicheren Daten in korrespondierende ausgegebene sichere Daten aus.

Je nach ermittelter Reaktionszeit kann der Teilnehmer 12 eine entsprechende Maßnahme einleiten. Insbesondere wird nach Überschreiten einer vorgegebenen oder vorgebbaren maximal zulässigen Reaktionszeit das Auslösen einer sicherheitsgerichteten Maßnahme eingeleitet.

Zusätzlich ist bevorzugt vorgesehen, dass der Teilnehmer 12 Fehler erkennt, sofern zumindest einer der übermittelten Werte 123 nach der maximal zulässigen Reaktionszeit noch nicht zurück übertragen worden ist.

Die erfindungsgemäßen Mechanismen des gemäß Fig. 1 bereitgestellte Netzwerksystems, mittels denen die, insbesondere Datenzyklus und/oder Bearbeitungszyklus basierten, Werte 123 generiert und übermittelt werden, stellen hierbei folglich ein synchronisierendes Broadcast-Verhalten sicher, mit welchem hinsichtlich allen im sicheren Datenstrom liegenden beeinflussenden Teilnehmern eine in festen Grenzen und/oder zu einem bestimmten Zeitpunkt definierte Transport-Beziehung auf dem Datenweg in Sende- und/oder Empfangsrichtung gewährleistet wird.

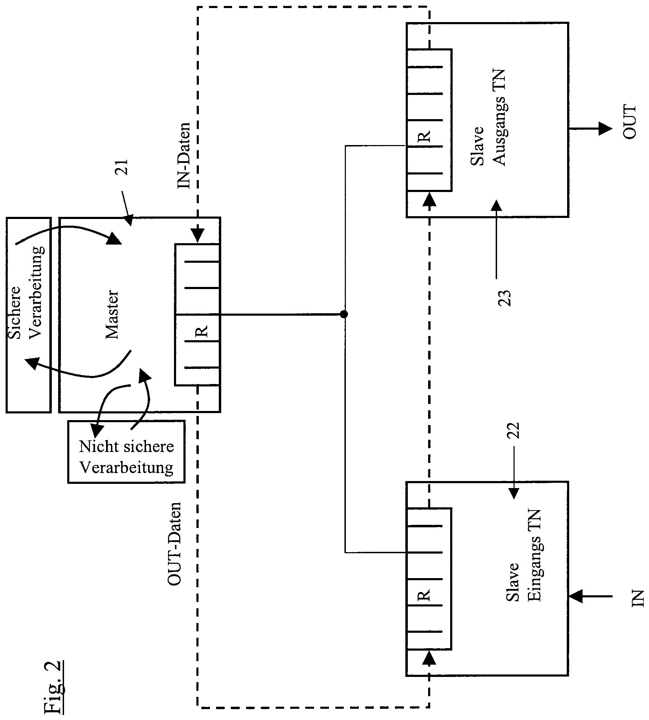

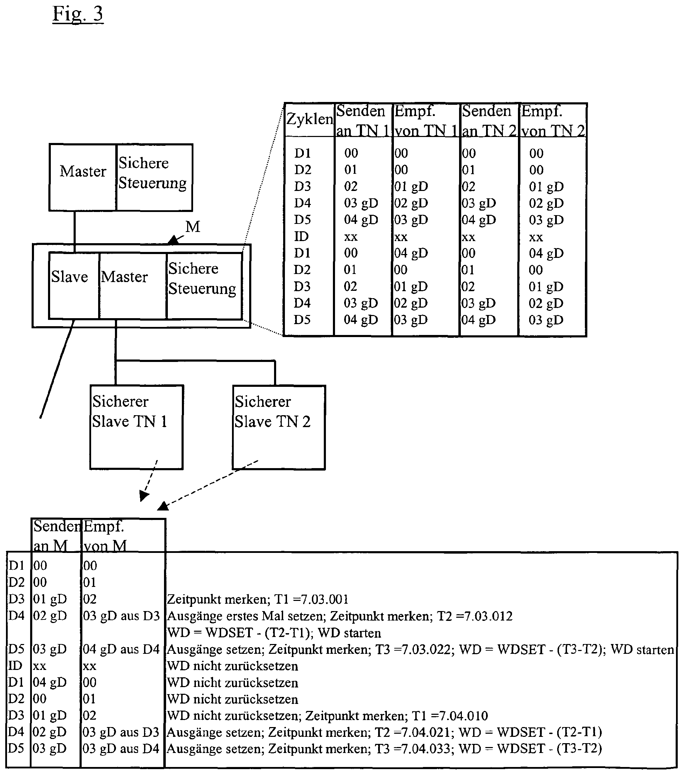

Wie nachfolgend in alternativer Ausführung ferner anhand der Fig. 2 und 3 beschrieben, ist der erfindungsgemäße Ansatz somit zur Überprüfung, Feststellung und/oder Einhaltung von Reaktionszeiten an eine Vielzahl von unterschiedlichen Datenverarbeitungsnetzwerken und/oder Systemen applikationsspezifisch anpassbar bzw. entsprechend der jeweiligen sicheren und/oder nicht sicheren Struktur mit zentraler Ausbildung, beispielsweise innerhalb von Rechnersystemen und deren Aufbau, dezentraler Ausbildung, beispielsweise bei Bussystemen, oder dezentral gekoppelter Ausbildung, beispielsweise mittels Systemkoppler, Übertrager und/oder Router über Systemgrenzen hinweg, adaptierbar.

Fig. 2 skizziert einen Master-Slave-Ringschiebebus mit einem als Master fungierenden Teilnehmer 21 und zwei Teilnehmern 22 und 23 als Slaves. Der Teilnehmer 22 ist hierbei ein Eingangsteilnehmer, der Eingangs- oder Eingabedaten aus der Peripherie, wie mit dem Pfeil IN angezeigt, einliest und an den Master 21 entsprechende Eingabe- bzw. IN-Daten zur sicheren und/oder nicht sicheren Verarbeitung in Ausgabe- bzw. OUT-Daten weiterleitet. Nach Verarbeitung der IN-Daten in OUT-Daten durch den Master 21 werden diese an die Slave 22 und 23 gesendet, woraufhin der Ausgangsteilnehmer 23 nach Einlesen der OUT-Daten korrespondierende Daten an die entsprechende Peripherie, wie mit dem Pfeil OUT angezeigt, ausgibt.

An alle zur Datenverarbeitung im System eingebundenen Teilnehmer 21, 22 und 23 werden die zu verarbeitenden Daten unter Verwendung eines Ringschieberegisters R in einem Datenzyklus übergeben, wobei Netzwerk- und/oder Systemspezifisch alle Teilnehmer 21, 22, 23 zur synchronen Datenübernahme angewiesen werden.

Die Synchronisation kann Netzwerkspezifisch auch auf andere Weise erfolgen. So kann beispielsweise unter Verwendung eines ETHERNET basierten Systems ein Broadcastsignal als eine Art Latchsignal oder TAKT / IMPULS zur Anweisung der Datenübernahme eingesetzt werden.

Unter der Annahme, dass bei fehlerfreiem Betrieb jeweilige Datenbearbeitungen, d.h. im Wesentlichen Teilnehmer spezifische Datenverarbeitungen und/oder Datenweiterleitungen, innerhalb einer vorgegebenen/vorgebbaren maximalen Zeit, also insbesondere auch die Verarbeitung der IN-Daten in OUT-Daten durch den Master 21 innerhalb einer vorgegebenen/vorgebbaren maximalen Zeit erfolgt, ermöglicht die Erfindung somit, dass grundsätzlich durch jeden Teilnehmer 21, 22 und 23, in bevorzugter Weise insbesondere durch den Ausgangsteilnehmer 23 eine Bestimmung der maximalen Zeit des Alters eingelesener Information und folglich eine Überwachung deren Aktualität durchführbar ist. Die Reaktionszeit bildet somit bereits einen unmittelbaren zeitlichen Bezug der OUT-Daten und zu den IN-Daten ohne, dass zusätzliche Information im Übertragungsprotokoll übertragen werden muss.

Werden zusätzliche Informationen, beispielsweise zur Applikationsspezifischen Überwachung einzelner Teilnehmer, der Übertragung über Systemgrenzen, von einzelnen Busstörungen und/oder von Fehlsynchronisationen benötigt, kann es notwendig sein, ein oder mehrere Bits hierfür im Übertragungsprotokoll bereitzustellen.

Erkennt der Teilnehmer somit, dass eingelesene Daten, beispielsweise basierend auf einer Unterbrechung eines Buskabels, nicht mehr gültig sind, also ein Ablauf der maximalen Zeit hinsichtlich der Datenaktualität vorliegt, wird ein bestimmter Ausgang in den sicheren Zustand geschaltet. Das Einleiten spezifischer, insbesondere sicherheitsgerichter Maßnahmen innerhalb vorgegebener Reaktionszeit ist folglich sichergestellt.

Bei einer ersten hierauf basierten bevorzugten Ausführungsform zählt jeder Teilnehmer 21, 22 und 23 die (gültigen) Datenzyklen mit. Bei einem (Bus-) Start und/oder nach einem Fehler erfolgt die Synchronisation durch einen
bestimmten Teilnehmer, wie z.B. durch den Master 21 bevorzugt durch ein entsprechendes Signal. Jeder Teilnehmer 21, 22 und 23 gibt die Zeit des Lesens der eingehenden Daten bezogen auf den vorangegangenen (gültigen) Datenzyklus an, wodurch im Wesentlichen ein relativer Zeitbezug eingestellt wird. Zweckmäßiger Weise werden für die Lesezeiten Zeitdimensionen verwendet, die der Länge zwischen den vergangenen Datenzyklen entsprechen.

Stammt z.B. das Eingangsdatum eines Teilnehmers aus dem vorhergehendem Datenzyklus, so gibt er eine 1 zurück, stammen die Daten aus dem vor-vorhergehendem Datenzyklus eine 2. Dies ist jedoch nur bis zu einer maximalen Größe zulässig, so dass ab einer vorgegebenen bzw. vorgebbaren Größe eines Eingangsdatums dieses als zu alt erkannt wird.

Wird gemäß einer bevorzugten Ausbildung z.B. bei einem Aktualitätswert von 7 automatisch davon ausgegangen, dass die Daten zu alt sind, reichen 3 Bits für die Zeitinformation aus und jeder Teilnehmer 21, 22 und 23 kann genau berechnen, wie alt die Daten sind bzw. ob die Daten noch ausreichend aktuell sind. Hieraus folgt, dass maximal 6 Datenzyklen alte Daten weitergereicht werden, wobei jeder Teilnehmer, der Daten wieder weitergibt, z.B. der Master 21, der die Eingangsdaten zu Ausgangsdaten verarbeitet, seine eigene Verarbeitungszeit auf die über den Aktualitätswert erhaltene Lesezeit addiert und daraus einen entsprechend neuen Aktualitätswert weitergibt.

Bei einer zweiten auf Fig. 2 basierten bevorzugten Ausführungsform überträgt der Master 21 mit jedem Satz von OUT-Daten einen Aktualitätswert an die Slaves 22 und 23 mit. Im gleichen Zyklus erhält der Master 21 von den Slaves 22 und 23 Eingangsinformationen mit Angabe des Aktualitätswertes. Bei fehlerfreiem Betrieb müssen demnach die von den Slaves 22 und 23 mit diesen Eingangsinformationen übertragenen Aktualitätswerte identisch mit dem Aktualitätswert sein, den der Master im vorherigen Zyklus an die Slaves 22 und 23 übertragen hat.

Bei einer weiteren bevorzugten Ausführungsform, insbesondere unter Ausnutzung der Eigenschaften des Interbus, erhält jeder Slave 22 und 23 nach dem Schieben der Daten ein Signal, dass die Teilnehmer 22 und 23 die Out-Daten übernehmen können und die IN-Daten vom Master 21 eingelesen werden. Dieses Signal erhalten alle Teilnehmer synchron, also in Form eines Ziel unabhängigen Signals (TIC-Target Independent Code).

Unter zusätzlicher Bezugnahme auf das in Fig. 3 skizzierte Ablaufschema von aufeinanderfolgenden Datenzyklen sendet der Master M im ersten Datenzyklus D1 und/oder nach einem Identitäts-(ID)-Zyklus an alle Slave-Teilnehmer TN1 und TN2 eine Null. Diese Null dient der Synchronisation. Die Slaves TN1 und TN2 senden in diesem Datenzyklus D1 eine Null bzw. ihren letzten Zählerstand, wenn es sich bei dem Datenzyklus D1 um einen Zyklus nach einem ID-Zyklus im laufenden Busbetrieb handelt.

Im nächsten Datenzyklus D2, also nachdem die Slaves TN1 und TN2 von dem Master M die Null erhalten haben, senden die Slaves TN1 und TN2 die Null zurück. Der Master M sendet in D2 den ersten Zeitwert 01.

Die DATA Werte in dem Telegramm mit dem der Zeitwert oder -stempel Null übertragen wird sind Statusinformationen und keine Werte, die zu den Peripherie-Ein- und/oder Ausgängen der Slaves TN1 und TN2 gehören. Folglich ist es möglich, bei jeder Fehlsynchronisation bzw. nach einem Fehler Fehlerinformationen mit zu übertragen.

Im nächsten Datenzyklus D3, also nachdem die Slaves TN1 und TN2 von dem Master M den ersten Zeitwert 01 erhalten haben, senden auch die Slaves TN1 und TN2 diesen ersten Zeitwert 01 mit gültigen Daten (gD) zurück. Der Master M sendet in D3 den zweiten Zeitwert 02 für jeden Slave TN1 bzw. TN2. Ferner werden in diesem Zyklus D3 von den sicheren Slaves TN1 und TN2 deren zu diesem Zeitpunkt gültigen Eingangsinformationen mit übertragen. Folglich merkt sich jeder Teilnehmer, also alle Slaves TN1 und TN2 und der Master M im Bus diese Zeit.

Bis zum nächsten Zyklus D4 hat der Master M alle Ausgangsinformationen aus den letzten Eingangsinformationen gewonnen. Im nächsten Zyklus D4 werden dann somit diese Ausgangsinformationen mit der nächsten Zeitinformation 03 zu jedem Slave TN1 und TN2 gesendet. Da der Slave TN1 bzw. TN2 im Bus weiß, dass seine eingelesene Ausgangsinformation, die er mit diesem Zyklus D4 erhalten hat, aus Eingangsinformationen, die aus dem letzten Datenzyklus D3 stammen, berechnet wurden, kann er seine Watchdog WD auf die Zeit des letzten Datenzyklus D3 zurücksetzen.

Gehen zwischendurch Zyklen defekt oder reagiert ein Teilnehmer nicht rechtzeitig, so sendet wenigstens ein Slave oder der Master eine Null oder ein FF oder einen anderen definierbaren Wert, damit erst wieder eine Synchronisation gefahren wird, und alle Teilnehmer M, TN1 und TN2 in Folge wissen, dass ihre Ausgangsinformationen aus veralteten Eingangsinformationen stammen. Werden diese Ausgangsinformationen älter als für einen Ausgangsteilnehmer bzw. dessen zugeordnetes -modul erlaubt ist, schaltet dieser selbstständig sicher ab oder führt eine sicherheitsgerichtete Funktion durch.

Jeder Teilnehmer M, TN1 und TN2 erhält also seine eigene Watchdogzeit. Diese müssen nicht von dem Master M zentral überwacht werden. Auch ist es nicht notwendig, eine Zeit im Protokoll mit zu versenden.

In Abwandlung zu vorstehend beschriebenen Beispiel zählt gemäß einer weiteren bevorzugten Ausführung jeder TN1 und TN2 für sich.

Insbesondere ist hierzu vorgeschlagen, dass nach der Überprüfung der Initialisierung jeder Slave TN1 und TN2 mit 1 als Aktualitätsparameter TIME anfängt und dieser pro Zyklus hoch zählt, wohingegen der Master M erst mit 1 anfängt, nachdem er die ersten Daten von den Slaves TN1 und TN2 verarbeitet hat, also einen Zyklus nachdem die Slaves die 1 gesendet haben. Jeder Teilnehmer M, TN1 und TN2 lässt somit einen Versatz von 1 zu.

TIME = 0 bedeutet somit, dass die anderen Daten im Telegramm nicht für IN-Daten oder OUT-Daten verwendet werden dürfen, wohingegen TIME <> 0 bedeutet, dass die anderen Daten im Telegramm als IN-Daten oder OUT-Daten zu interpretieren sind.

Werden hierbei wiederum bevorzugt die Eigenschaften des Interbus genutzt, erhält somit jeder Teilnehmer M, TN1 und TN2 nach dem Schieben der Daten ein Signal, dass der Teilnehmer jetzt die OUT-Daten übernehmen kann und/oder die IN-Daten eingelesen werden.

Im ersten Datenzyklus nach einem ID-Zyklus sendet der Master M somit die für die Slaves TN1 und TN2 gültigen Aktualitätsparameter, welche jeweils einem wiederholt auftretenden Zählerstand entsprechen. Die Slaves TN1 und TN2 senden im ersten Datenzyklus nach dem ID-Zyklus ihre jeweils gültigen Zählerstände als Aktualitätsparameter.

Nach einem (erneuten) Einschalten des Systems, d.h. insbesondere nach dem Einschalten (POWER ON) oder einem Neustart (RESET) des Masters M, sendet der Master M an alle Slaves TN1, TN2 eine 0 zur Synchronisation. Die Slaves senden ebenfalls im ersten Datenzyklus nach dem Einschalten, im Falle eines Einschaltens (POWER ON) oder eines Neustarts (RESET) der Slaves TN1, TN2 eine Null. Haben die Slaves TN1, TN2 keine Einschalt- oder Neustartanweisung erhalten, senden sie ihren letzten Zählerstand als Aktualitätsparameter.

Nachdem die Slaves TN1, TN2 die Null von dem Master M erhalten haben, senden die Slaves TN1, TN2 im nächsten Datenzyklus die Null zurück.

Sind vom Master M oder einem Slave TN1, TN2 eine Null gesendet worden, befinden sich beide solange in einer Initialisierungsphase, bis diese von beiden als gültig abgeschlossen wurde.

Der Master M sendet in diesem Zyklus den ersten Aktualitätsparameter an jeden Slave TN1 und TN2. Die DATA-Werte in dem Telegramm, in dem der Zeitstempel Null übertragen wird, sind Statusinformationen und keine Werte für die Peripherieeingänge oder -ausgänge. Somit ist es wiederum möglich bei jedem Fehler oder bei einer Fehlsynchronisation Fehlerinformationen mit zu übertragen.

In dem nächsten Datenzyklus werden dann von den Slaves TN1 und TN2 die ersten Aktualitätsparameter, die sie vorher von dem Master M erhalten haben, an diesen zurückgesendet. Der Master M sendet danach entsprechend den zweiten Aktualitätsparameter für jeden Slave TN1 und TN2. Von dem Slave TN1 bzw. TN2 werden in diesem Zyklus seine zu diesem Zeitpunkt gültigen Eingangsinformationen mit übertragen.

Deshalb merkt sich jeder Slave TN1 und TN2 im Bus den zum Aktualitätsparameter zugehörigen Zeitpunkt.

Bis zum nächsten Zyklus hat der Master M wiederum alle Ausgangsinformationen aus den letzten Eingangsinformationen gewonnen. Im nächsten Datenzyklus werden dann diese Ausgangsinformationen mit dem nächsten Aktualitätsparameter zu jedem Slave TN1 und TN2 gesendet. Da der Slave TN1, TN2 weiß, dass seine Ausgangsinformation, die er mit diesem Zyklus erhalten hat, aus den Eingangsinformationen, die aus dem letzten Datenzyklus stammen, berechnet wurden, kann er seine Watchdog auf den Zeitpunkt des letzten Datenzyklus zurücksetzen.

Gehen zwischendurch Zyklen defekt oder reagiert ein Teilnehmer nicht rechtzeitig, so sendet der entsprechende Slave oder der Master als Aktualitätsparameter beispielsweise eine Null oder ein FF oder einen anderen definierbaren Wert, damit erst wieder eine Synchronisation gefahren wird, und alle Teilnehmer in Folge wissen, dass ihre Ausgangsinformationen aus veralteten Eingangsinformationen stammen. Werden diese Ausgangsinformationen älter als für einen Ausgangsteilnehmer bzw. dessen zugeordnetes -modul erlaubt, schaltet dieser selbstständig sicher ab oder führt eine sicherheitsgerichtete Funktion durch.

Jeder Slave TN1 und TN2 erhält also seine eigene Watchdogzeit. Diese muss nicht von der sicheren Steuerung überwacht werden. Auch ist es nicht notwendig, eine absolute Zeitinformation im Protokoll mit zu versenden.

Ein fehlerfreier Betrieb ist somit bei beiden vorstehend beschriebenen Applikationen grundsätzlich gewährleistet, dass, solange der Master M das Protokoll für den nächsten Zyklus synchron abarbeitet, die neuen Ausgangsinformationen im nächsten Zyklus zur Verfügung stehen und alle Eingangsteilnehmer bzw. -module ihre Eingangsinformation synchron zur Verfügung stellen.

Wie aus Fig. 3 ersichtlich ist, findet die Erfindung auch Anwendung bei Gesamtsystemen, bei denen der Master M eine sichere Steuerung ist und/oder ein Systemkoppler eingesetzt ist, wobei die Watchdogzeit in diesem Fall aufgeteilt wird, da der Systemkoppler in diesem Fall sowohl Master M eines unterlagerten Systems als auch Slave des überlagerten Systems ist.

Der Systemkoppler erhält folglich je eine Watchdogzeit für die Ausgänge des unterlagerten Systems und eine Watchdogzeit für die Eingänge des unterlagerten Systems. Die Watchdogzeiten auf den Ausgangsteilnehmern bzw. deren Ausgangsmodulen des unterlagerten Systems müssen dann entsprechend verkleinert werden. Dies ist jedoch von der Zeit her im Wesentlichen unkritisch, da sichere Eingänge aus überlagerten oder unterlagerten Systemen herkömmlicher Weise immer langsamer sind, als direkt am Bus angeschlossene Eingänge.

Auch wenn die vorstehende Beschreibung der Erfindung auf einigen bevorzugten Ausführungsformen basiert, ist es für einen Fachmann ersichtlich, dass Modifikationen innerhalb des durch die anhängenden Ansprüche definierten Schutzbereichs erfasst sind.

So deckt die Erfindung insbesondere ferner Weiterbildungen ab, bei denen sichere und/oder normale Teilnehmer mit und/oder ohne Zeitinformation am gleichen Bus gemischt vorliegen, eine Verarbeitung der Daten im Master und/oder in einem oder mehreren Slaves erfolgt und/oder es sich nicht um ein Master-Slave-System sonder um ein System, bei dem z.B.
die Masterfunktion ähnlich einem Tokenring-Ansatz weitergegeben wird.

Ferner ist es nicht zwingend, dass die Kommunikation immer über einen Master erfolgt. Alternativ kann für die Anwendung der Erfindung die Kommunikation auch ohne Master direkt zwischen Slaves und/oder über einen Master erfolgen, der die Daten lediglich von einem Slave zu einem anderen weiterleitet, ohne diese zu verändern. Ferner können Slaves für die Anwendung der Erfindung sichere digitale/analoge Eingänge und/oder sichere digitale/analoge Ausgänge besitzen.

Die Erfindung ist somit im Wesentlichen bei allen Datenverarbeitungssystemen einsetzbar, bei denen gewährleistbar ist, dass alle Teilnehmer zum gleichen Zeitpunkt eine Art "Takt" oder "Impuls" erhalten und insbesondere, bei denen es wichtig ist sicherzustellen, dass die Ausgänge einen definierten Zustand einnehmen, wenn keine aktuellen Eingangsinformationen vorliegen.

## Patentansprüche

1. Verfahren zur Sicherstellung von maximalen Reaktionszeiten in einem Datenverarbeitungssystem, insbesondere zwischen einem Eingangssignal, insbesondere einem sicheren Eingangssignal (IN), und korrespondierendem Ausgangssignal, insbesondere einem sicheren Ausgangssignal (OUT), bei welchem eingangsseitig an im System eingebundenen Teilnehmern (11, 13, 14, 21, 22, 23, M, TN1, TN2) anliegende Daten während jedes Datenzyklus synchron eingelesen werden, eingelesene Daten (IN, OUT) in Bezug auf wenigstens einen Datenzyklus basierten, den eingelesenen Daten zugeordneten Aktualitätsparameter (123) überprüft werden, unter Ansprechen auf das Erreichen einer definierten Abweichung wenigstens eines Aktualitätsparameters gegenüber einer definierten Aktualitätsschwelle auf einen Fehler erkannt wird, und
unter Ansprechen auf eine Fehlererkennung eine definierte Funktion, insbesondere eine sicherheitsgerichtete Funktion, ausgelöst wird, wobei jeder Teilnehmer die gültigen Datenzyklen bezogen auf die Zeit des Einlesens mitzählt und eine Weitergabe von auf eingelesenen Daten basierten Daten nur bis zu einer definierten Anzahl von gezählten Datenzyklen erfolgt und andernfalls auf Fehler erkannt wird, derart, dass jeder Teilnehmer, der Daten wieder weitergibt, seine eigene Datenzykluszeit des Einlesens auf eine über den Aktualitätsparameter bereits erhaltene Einlesezeit addiert, wobei von wenigstens einem Eingangsteilnehmer oder einem dem Teilnehmer zugeordneten Eingangsmodul Eingangsdaten eingelesen werden und diese Daten nach Verarbeitung von einem Ausgangsteilnehmer oder einem, einem Teilnehmer zugeordneten Ausgangsmodul als Ausgangsdaten ausgegeben werden, wobei eine Verarbeitung im gleichen Teilnehmer erfolgen kann oder nach Weitergabe der Eingangsdaten durch einen anderen, der nach Verarbeitung der Eingangsdaten zu Ausgangsdaten diese ausgibt oder einem anderen Teilnehmer zur Ausgabe übergibt.

2. Verfahren nach vorstehendem Anspruch, ferner
**gekennzeichnet dadurch, dass** der Schritt der Überprüfung während jedes Datenzyklus durchgeführt wird.

3. Verfahren nach einem der vorstehenden Ansprüche, ferner **gekennzeichnet dadurch, dass** zur Synchronisation des Einlesens zumindest zeitweise durch einen ausgewählten Teilnehmer ein Synchronisierungssignal an alle Teilnehmer, insbesondere durch einen Master an alle Slaves, gesendet wird.

4. Verfahren nach vorstehendem Anspruch, ferner
**gekennzeichnet dadurch, dass** ein Synchronisierungssignal bei einem Systemstart und/oder nach einem System- und/oder Teilnehmer basierten Fehler gesendet wird.

5. Verfahren nach einem der vorstehenden Ansprüche, ferner **gekennzeichnet dadurch, dass** zur Synchronisation des Einlesens mit jedem Datenzyklus ein Broadcast- und/oder Latchsignal, an alle Teilnehmer gesendet wird.

6. Verfahren nach einem der vorstehenden Ansprüche, ferner **gekennzeichnet dadurch, dass** eine Datenweitergabe unter Verwendung von Ringschieberegistern (R) erfolgt.

7. Verfahren nach vorstehendem Anspruch, ferner
**gekennzeichnet dadurch, dass** ein ausgewählter Teilnehmer zusammen mit einzulesenden Daten Aktualitätsparameter überträgt.

8. Verfahren nach einem der vorstehenden Ansprüche, ferner **gekennzeichnet dadurch, dass** der Aktualitätsparameter erzeugende Teilnehmer oder ein Ausgangsteilnehmer eine Auswertung des Aktualitätsparameters durchführt, insbesondere zur Bestimmung und/oder Überwachung der maximalen Zeit einer Eingangsinformation und/oder in Bezug einer auf der Eingangsinformation basierten Reaktionszeit.

9. Verfahren nach einem der vorstehenden Ansprüche, wobei Eingangsdaten in Ausgangsdaten innerhalb einer vorgegebenen/vorgebbaren maximalen Zeit von einem ausgewählten Teilnehmer verarbeitet werden.

10. Verfahren nach einem der vorstehenden Ansprüche, ferner **gekennzeichnet dadurch, dass** ein von einem Teilnehmer zuzuordnende Aktualitätsparameter, insbesondere ein Zähler und/oder eine Watchdogzeit, unter Ansprechen auf das Einlesen einer Ausgangsinformation, die auf einer zeitfolgerichtigen Eingangsinformation basiert, zurückgesetzt wird.

11. Verfahren nach einem der vorstehenden Ansprüche, ferner **gekennzeichnet dadurch, dass** die Überwachung von Aktualitätsparametern zentral oder dezentral erfolgt.

12. Datenverarbeitungssystem, welches zur Durchführung eines Verfahrens nach einem der vorstehenden Ansprüche angepasst ist.

13. System nach Anspruch 12, wobei die Teilnehmer sichere und/oder nicht sichere Eingangsteilnehmer, Ausgangsteilnehmer, Teilnehmer mit zugeordneten Ein-und/oder Ausgangsmodulen umfassen und sichere digitale/analoge Eingänge und/oder sichere digitale/analoge Ausgänge besitzen.

14. System nach Anspruch 12 oder 13, wobei die Teilnehmer wenigstens einen Master und Slaves umfassen, zur Verarbeitung von Eingangs- zu Ausgangsdaten eine Kommunikation zwischen zwei Slaves direkt oder über einen Master erfolgt und/oder Daten ohne Veränderung über einen Master von einem Slave zu einem anderen weiterleitbar sind und/oder eine Masterfunktion übergebbar ist.

15. System nach einem der Ansprüche 12 bis 14, wobei ein Master eine sichere Steuerung und/oder Teil eines Systemkopplers ist.

16. System nach einem der Ansprüche 12 bis 15, ferner **gekennzeichnet dadurch, dass** jeder Teilnehmer wenigstens eine Watchdogzeit besitzt.

17. System nach einem der Ansprüche 12 bis 16, wobei Teilnehmer mit und ohne Zeitinformation am gleichen Bus, insbesondere einem Ringbus, gemischt vorliegen.

18. System nach einem der Ansprüche 12 bis 17, wobei wenigstens einem Teilnehmer eine intelligente Einheit mit Treiber-artigen Mitteln zur Erzeugung wechselnder Aktualitätsparameter zugeordnet ist, die eindeutig und/oder in festen Zeit- und/oder Zyklusstrukturen über einen definierbaren Zeitraum zur Verfügung stehen.

19. System nach einem der Ansprüche 12 bis 18, wobei zumindest ein Aktualtitätsparameter erzeugender und/oder Ausgangsteilnehmer eine den Aktualitätsparameter auswertende Einheit aufweist.

## Claims

1. Method for ensuring maximum reaction times in a data processing system, in particular between an input signal, in particular a safe input signal (IN), and a corresponding output signal, in particular a safe output signal (OUT),
in which
data, which are present on the input side of users (11, 13, 14, 21, 22, 23, M, TN1, TN2) incorporated in the system, are read synchronously during each data cycle;
data (IN, OUT), which have been read in, are checked in relation to at least one currency parameter (123), which is based on a data cycle and is associated with the data which have been read in,
an error is identified in response to a defined discrepancy being reached between at least one currency parameter and a defined currency threshold, and
wherein a defined function, in particular a safety-related function, is triggered in response to identification, wherein each user concurrently counts the valid data cycles based on the time of the reading in and a forwarding of data based data, which have been read-in, is only performed until a defined amount of counted data cycles, such that each user forwarding data is adding its own data cycle time for the read-in operation to a time for the read-in operation which has been obtained from the currency parameter, wherein input data are read-in by at least one input user or by an input module associated to said user and are outputted after the processing as output data by an output user or by an output module associated to an user, wherein a processing can be performed in the same user or after the forwarding of the input data by an other user, which processes the input data to output data and outputs said output data or transfers said output data to an other user for outputting.

2. Method according to the preceding claim, furthermore **characterized in that** the step of checking is performed during each data cycle.

3. Method according to anyone of the preceding claims, furthermore **characterized in that** the read-in operation is synchronized by virtue of a synchronization signal being sent, at least intermittently, to all users by one selected user, in particular to all slaves by a master.

4. Method according to the preceding claim, furthermore **characterized in that** a synchronization signal is sent when the system is started and/or after a system and/or user based error.

5. Method according to anyone of the preceding claims, furthermore **characterized in that** the read-in operation is synchronized by sending a broadcast and/or latch signal to all users with each data cycle.

6. Method according to anyone of the preceding claims, furthermore **characterized in that** data is forwarded using ring shift registers(R).

7. Method according to the preceding claim, furthermore **characterized in that** a selected user transfers currency parameters together with data which are to be read in.

8. Method according to anyone of the preceding claims, furthermore **characterized in that** the user producing currency parameters or an output user evaluates the currency parameter, in particular in order to determine and/or monitor the maximum time for an input information and/or in relation to a reaction time which is based on the input information..

9. Method according to anyone of the preceding claims, wherein input data are processed by a selected user to produce output data within a prescribed/prescribable maximum time.

10. Method according to anyone of the preceding claims, furthermore **characterized in that** a currency parameter to be assigned by a user, in particular a counter and/or a watchdog time, is reset in response to the reading-in of an output information which is based on an input information in the correct time sequence.

11. Method according to anyone of the preceding claims, furthermore **characterized in that** currency parameters are monitored centrally or locally.

12. Data processing system which is suitable for carrying out the method as claimed in anyone of the preceding claims.

13. System according to claim 12, wherein the users comprise safe and/or non-safe input users, output users, users with associated input and/or output modules, and have safe digital/analog inputs and/or safe digital/analog outputs.

14. System according to claim 12 or 13, wherein the users comprise at least one master and slaves, input data is processed to produce output data by virtue of two slaves communicating directly or via a master and/or data being able to be forwarded via a master from one slave to another without alteration and/or a master function being able to be transferred.

15. System according to anyone of claims 12 to 14, wherein a master is a safe controller and/or part of a system coupler.

16. System according to anyone of claims 12 to 15, further **characterized in that** each user has at least one watchdog time.

17. System according to anyone of claims 12 to 16, wherein users are present in a mixture with and without time information on the same bus.

18. System according to anyone of claims 12 to 17, wherein at least one user has an associated intelligent unit having driver-like means for producing alternating currency parameters, which are available in unique form and/or in fixed time and/or cycle structures over a definable period of time.

19. System according to anyone of claims 12 to 18, wherein at least one user producing a currency parameter and/or being an output user has a unit, which evaluates the currency parameter.

## Revendications

1. Procédé permettant de garantir des temps de réaction maximaux dans un système de traitement de données, en particulier entre un signal d'entrée, en particulier un signal d'entrée sûr (IN), et un signal de sortie correspondant, en particulier un signal de sortie sûr (OUT), selon lequel :
côté entrée des données appliquées sur des utilisateurs (11, 13, 14, 21, 22, 23, M, TN1, TN2) impliqués dans le système sont lues de manière synchrone pendant chaque cycle de données,
les données lues (IN, OUT) sont contrôlées en ce qui concerne au moins un paramètre d'actualité (123) basé sur le cycle de données et associé aux données lues,
en réponse à l'obtention d'un écart défini entre au moins un paramètre d'actualité et un seuil d'actualité défini, une erreur est détectée, et
en réponse à une détection d'erreur, une fonction définie, en particulier une fonction liée à la sécurité, est déclenchée, où chaque utilisateur compte les cycles de données valables par rapport au temps de la lecture et une transmission des données basées sur les données lues n'a lieu que jusqu'à ce qu'un nombre défini de cycles de données ait été compté, et, dans le cas contraire, une erreur est détectée, de telle manière que chaque utilisateur qui transmet les données ajoute son propre temps de cycle de données de la lecture à un temps de lecture déjà obtenu par l'intermédiaire des paramètres d'actualité, où des données d'entrée sont lues par au moins un utilisateur d'entrée ou un module d'entrée associé à l'utilisateur et ces données, après avoir été traitées par un utilisateur de sortie ou un module de sortie associé à un utilisateur, sont délivrées en tant que données de sortie, où un traitement peut avoir lieu dans le même utilisateur ou, après transmission des données d'entrée par un autre, qui, après traitement des données d'entrée en données de sortie, délivre celles-ci ou les transfère à un autre abonné aux fins de délivrance.

2. Procédé selon la revendication précédente, **caractérisé en outre en ce que** l'étape de contrôle est réalisée pendant chaque cycle de données.

3. Procédé selon l'une quelconque des revendications précédentes, **caractérisé en outre en ce que**, pour la synchronisation de la lecture, un signal de synchronisation est envoyé au moins par intermittence par un utilisateur sélectionné à tous les utilisateurs, en particulier par un maître à tous les esclaves.

4. Procédé selon la revendication précédente, **caractérisé en outre en ce qu'**un signal de synchronisation est envoyé lors d'un démarrage du système et/ou après une erreur basée sur le système et/ou l'utilisateur.

5. Procédé selon l'une quelconque des revendications précédentes, **caractérisé en outre en ce que**, pour la synchronisation de la lecture avec chaque cycle de données, un signal de diffusion et/ou de verrouillage est envoyé à tous les utilisateurs.

6. Procédé selon l'une quelconque des revendications précédentes, **caractérisé en outre en ce qu'**une transmission des données a lieu au moyen de registres à décalage circulaire (R).

7. Procédé selon la revendication précédente, **caractérisé en outre en ce qu'**un utilisateur sélectionné transmet les paramètres d'actualité conjointement avec les données à lire.

8. Procédé selon l'une quelconque des revendications précédentes, **caractérisé en outre en ce que** l'utilisateur générant des paramètres d'actualité ou un utilisateur de sortie réalise une évaluation du paramètre d'actualité, en particulier pour la détermination et/ou la surveillance du temps maximal d'une information d'entrée et/ou par rapport à un temps de réaction basé sur l'information d'entrée.

9. Procédé selon l'une quelconque des revendications précédentes, dans lequel les données d'entrée sont traitées en données de sortie par un utilisateur sélectionné pendant un temps maximal prédéfini/pouvant être prédéfini.

10. Procédé selon l'une quelconque des revendications précédentes, **caractérisé en outre en ce qu'**un paramètre d'actualité à associer à un utilisateur, en particulier un compteur et/ou un temps de chien de garde, est réinitialisé en réponse à la lecture d'une information de sortie qui se base sur une information d'entrée à chronologie correcte.

11. Procédé selon l'une quelconque des revendications précédentes, **caractérisé en outre en ce que** la surveillance des paramètres d'actualité a lieu de manière centralisée ou décentralisée.

12. Système de traitement de données, lequel est adapté à la mise en oeuvre d'un procédé selon l'une quelconque des revendications précédentes.

13. Système selon la revendication 12, dans lequel les utilisateurs comprennent des utilisateurs d'entrée sûrs et/ou non sûrs, des utilisateurs de sortie, des utilisateurs comprenant des modules d'entrée et/ou de sortie associés et possèdent des entrées numériques/analogiques sûres et/ou des sorties numériques/analogiques sûres.

14. Système selon la revendication 12 ou 13, dans lequel les utilisateurs comprennent au moins un maître et des esclaves, pour le traitement de données d'entrée en données de sortie, une communication entre deux esclaves est établie directement ou par l'intermédiaire d'un maître et/ou des données peuvent être transmises sans modification par l'intermédiaire d'un maître d'un esclave à un autre et/ou une fonction maître peut être transférée.

15. Système selon l'une quelconque des revendications 12 à 14, dans lequel un maître est une commande sûre et/ou fait partie d'un coupleur de système.

16. Système selon l'une quelconque des revendications 12 à 15, **caractérisé en outre en ce que** chaque utilisateur possède au moins un temps de chien de garde.

17. Système selon l'une quelconque des revendications 12 à 16, dans lequel les utilisateurs sont présents mélangés sur le même bus, en particulier un bus en anneau, avec ou sans information de temps.

18. Système selon l'une quelconque des revendications 12 à 17, dans lequel une unité intelligente comprenant des moyens du type pilote pour la génération de paramètres d'actualité variables est associée à au moins un utilisateur, lesquels sont disponibles clairement et/ou dans des structures de temps et/ou de cycle fixes pendant un laps de temps pouvant être défini.

19. Système selon l'une quelconque des revendications 12 à 18, dans lequel au moins un utilisateur de sortie et/ou générant un paramètre d'actualité comprend une unité évaluant le paramètre d'actualité.
